# EUROPÄISCHE PATENTSCHRIFT

(11) **EP 2 886 506 B1**
(45) Veröffentlichungstag und Bekanntmachung des Hinweises auf die Patenterteilung: **20.07.2016**
(21) Anmeldenummer: 14198102.7
(22) Anmeldetag: 16.12.2014
(51) Int. Cl.: B66F 3/10, B66F 3/44, F16H 25/20

(54) **Hubsäule**
Lifting column
Colonne de levage

(30) Priorität: 19.12.2013 DE 102013226754
(43) Veröffentlichungstag der Anmeldung: 24.06.2015
(73) Patentinhaber: Aktiebolaget SKF, 415 50 Göteborg (SE)
(72) Erfinder: Soltermann, Marcel, 4421 St. Pantaleon (CH)
(74) Vertreter: Kuhstrebe, Jochen

(56) Entgegenhaltungen:
- EP-A1- 1 230 872
- DE-A1- 3 505 842
- DE-A1- 10 018 742
- DE-A1- 19 608 171
- DE-A1-102005 044 131
- DE-A1-102010 052 918
- DE-B3-102008 060 043
- DE-U1- 9 319 978
- FR-A1- 2 655 634
- US-A- 3 161 074

## Beschreibung

Ausführungsbeispiele beziehen sich auf eine Hubsäule.

In vielen Bereichen der Technik werden Hubsäulen eingesetzt. Mit einer Hubsäule kann ein Gegenstand oder eine Vorrichtung in unterschiedliche Positionen gebracht werden. Konventionelle Hubsäulen weisen meist einen maximalen möglichen Hub auf, der von einer kleinsten möglichen Bauhöhe der Hubsäule abhängig ist. Meist ist der Hub der Hubsäule kleiner als die kleinste Bauhöhe der Hubsäule in einem eingefahrenen Zustand.

Beispielsweise offenbart die DE 35 05 842 A1 eine Teleskopsäule mit elektromotorischem Antrieb und mit mindestens einem Innenrohr sowie einem an dessen Außenfläche verschiebbar geführten Außenrohr, wobei der elektromotorische Antrieb als Schub- und Zugantrieb ausgebildet ist.

Aus der DE 10 2005 044 131 A1 ist ein Wagenheber bekannt mit einem Standfuss und einer oberhalb des Standfußes angeordneten, ausfahrbaren Hubsäule. Der Wagenheber weist dabei drei ineinander angeordnete Spindeln auf, wobei zwischen der inneren und der mittleren Spindel und der mittleren und der äußeren Spindel Gewinde mit unterschiedlichen Ganghöhen vorgesehen sind.

Aus der DE 100 18 742 A1 ist eine Verstelleinrichtung mit einem Schneckenradgetriebe bekannt, die unter einer Tischplatte angeordnet ist. Die DE 10 2008 060 043 B3 beschreibt eine Spindelpresse. Die DE 93 19 978 betrifft eine Führung für eine Spindel. Dazu ist ein Motor eingesetzt, der außerhalb und exzentrisch zu einem Rohres angeordnet ist. Die EP 1 230 872 A1 betrifft eine Hubsäule bei der ein Motor, der eine Mutter antreibt, exzentrisch zu der Mutter angeordnet ist.

Die DE 196 08 171 A1 offenbart einen sehr aufwändige Anschluss einer Hohlwelle über ein Planetenradgetriebe an eine Gewindespindel. Die FR 2 655 634 betrifft eine Spannvorrichtung, bei der Rohre zylindrisch ineinander verschiebbar sind.

Die DE 10 2010 052 918 A1 betrifft einen Wagenheber, dessen Hubelement gegenüber einem Ständer verfahrbar ist, und mit einem Gewindetrieb, der eine Gewindespindel und eine auf der Gewindespindel angeordnete Spindelmutter aufweist. Eine Relativdrehung zwischen der Gewindespindel und der Spindelmutter wird in eine Längsverschiebung zwischen der Gewindespindel und der Spindelmutter entlang einer Spindelachse für eine Hubbewegung des Hubelementes umgewandelt. Als Gewindetrieb ist ein Planetenwälzgewindetrieb vorgesehen, dessen zwischen der Spindelmutter und der Gewindespindel angeordnete Planeten in Wälzeingriff mit der Gewindespindel und der Spindelmutter stehen.

Für viele Vorrichtungen, beispielsweise Operationstische, Krankenliegen, Präsentationstische oder Behandlungsstühle ist es erforderlich, dass diese in einer ersten Position eine sehr geringe Höhe aufweisen. In einer zweiten Position sollen diese Vorrichtungen in eine hohe Position gefahren werden. Dazu sind Hubsäulen mit einer geringe Bauhöhe und einem großen Hub notwendig. Konventionelle Hubsäulen, mit einer geringen Bauhöhe und einem Hub, der größer ist als diese Bauhöhe, weisen oft einen sehr aufwendigen und komplizierten Aufbau auf. Ferner kann bei diesen Hubsäulen oft eine hohe Geräuschentwicklung auftreten. Der Grund dafür kann ggf. bei einer Antriebsvorrichtung, einem Getriebe oder einer Übersetzung der Hubsäule liegen.

Es besteht daher ein Bedarf daran, einen Kompromiss zwischen einer Bauhöhe und einem Hub einer Hubsäule zu verbessern. Ferner soll ein Verstellen der Hubsäule mit einer möglichst geringen Geräuschentwicklung ermöglicht werden. Diesem Bedarf trägt eine Hubsäule nach dem Anspruch 1 Rechnung.

Ausführungsbeispiele betreffen eine Hubsäule, die ein Bauteil mit einem Innengewinde aufweist. Ferner umfasst die Hubsäule eine Hohlwelle. Die Hohlwelle hat ein mit dem Innengewinde in Eingriff stehendes Außengewinde. An der Hohlwelle ist auch ein Innengewinde ausgebildet. Ferner umfasst die Hohlwelle eine Gewindespindel. Die Gewindespindel ist innerhalb der Hohlwelle angeordnet. Ein Außengewinde der Gewindespindel steht mit dem Innengewinde der Hohlwelle in Eingriff. Die Hubsäule hat auch eine Antriebseinrichtung. Diese ist ausgebildet, um die Hohlwelle relativ zu der Gewindespindel und dem Bauteil zu drehen. Das Bauteil und die Hohlwelle sind bei einer Drehung der Hohlwelle in die gleiche axiale Richtung bewegbar, sodass eine Höhe der Hubsäule veränderbar ist.

Dadurch, dass die Hubsäule eine innerhalb der Hohlwelle angeordnete Gewindespindel umfasst und das Bauteil und die Hohlwelle bei einer Drehung der Hohlwelle in die gleiche axiale Richtung bewegbar sind, ist eine Höhe der Hubsäule veränderbar. Es kann beispielsweise erreicht werden, dass mit der Hubsäule ein Hub ausgeführt werden kann, der größer ist als eine Bauhöhe der Hubsäule in einem eingefahrenen Zustand. Ferner kann dies ggf. mit einem sehr einfachen Aufbau der Antriebs- und Übersetzungseinheit der Hubsäule ermöglicht werden. So kann möglicherweise auch eine Reduzierung einer Geräuschentwicklung bei einem Verstellen der Hubsäule erreicht werden.

Ein Bauteil mit einem Innengewinde kann dabei jedwedes Bauteil sein, das geeignet ist, mit dem Außengewinde der Hohlwelle in Eingriff zu stehen. Beispielsweise kann das Bauteil eine Gewindemutter oder ein Gewindemuttersystem sein. Eine innerhalb der Hohlwelle angeordnete Gewindespindel kann dabei in einem radial innenliegenden Bereich der Hohlwelle angeordnet sein. Beispielsweise kann die Gewindespindel konzentrisch zu einer Bohrung der Hohlwelle angeordnet sein. Ferner kann eine Längsachse der Gewindespindel parallel zu einer Längsachse der Hohlwelle ausgerichtet sein. Beispielsweise kann sich die Hohlwelle um ihre Längsachse drehen. Das Innengewinde der Hohlwelle kann dabei ggf. jedwedes Innengewinde sein, das ausgebildet ist, um mit dem Außengewinde der Gewindespindel in Eingriff zu stehen. Beispielsweise kann das Innengewinde an einer Gewindemutter oder einem Gewindemuttersystem ausgebildet sein, das mit der Hohlwelle verbunden ist.

Im Folgenden soll eine Höhe der Hubsäule dabei eine Ausdehnung der Hubsäule in eine Richtung sein, in die der Hub der Hubsäule erfolgt. Mit anderen Worten ausgedrückt, ist die Höhe der Hubsäule die Richtung, in die die Hubsäule verlängert und/oder verkürzt werden kann.

Ergänzend kann die Hubsäule gemäß einem Ausführungsbeispiel zumindest zwei Teleskoprohre umfassen. Dadurch kann beispielsweise in manchen Ausführungsbeispielen bewirkt werden, dass die Antriebseinrichtung sowie die Hohlwelle zumindest abschnittsweise in einem ausgefahrenen Zustand durch die Teleskoprohre überdeckt sind. Beispielsweise können die Teleskoprohre einen ähnlichen Querschnitt aufweisen. Ein Teleskoprohr mit einem kleinsten Querschnitt kann ggf. in einem Teleskoprohr mit einem größeren Querschnitt angeordnet sein. Ergänzend oder alternativ können die Teleskoprohre konzentrisch zueinander angeordnet sein. Das Teleskoprohr mit der größeren Querschnittsfläche kann ggf. mit einer Standplatte verbunden sein. Diese können evtl. zum Befestigen der Hubsäule auf einem Untergrund dienen.

Bei einigen weiteren Ausführungsbeispielen weist das Teleskoprohr mit dem kleineren Querschnitt eine Deckplatte auf. Diese kann ggf. zum Befestigen der anzuhebenden Fläche oder Vorrichtung dienen. Ergänzend oder alternativ kann die anzuhebende Fläche oder Vorrichtung auch direkt an einem axialen Ende des Teleskoprohrs mit dem kleineren Querschnitt befestigt werden, das der Standplatte abgewandt ist.

Bei einigen weiteren Ausführungsbeispielen umfasst die Hubsäule eine Mehrzahl von Teleskoprohren. Dadurch kann ggf. bewirkt werden, dass die Hubsäule einen Hub aufweisen kann, der größer ist als eine kleinste Bauhöhe. Dies kann beispielsweise möglich sein, weil alle Teleskoprohre ineinander gefahren werden können. Beispielsweise kann die Hubsäule ein drittes Teleskoprohr aufweisen, das zwischen dem ersten Teleskoprohr mit dem größeren Querschnitt und dem zweiten Teleskoprohr mit dem kleineren Querschnitt angeordnet ist. Das dritte Teleskoprohr kann einen Querschnitt aufweisen, der kleiner als der Querschnitt des Teleskoprohrs ist, das mit der Standplatte verbunden ist. Das dritte Teleskoprohr kann ggf. auch einen Querschnitt aufweisen, der größer ist als der Querschnitt des Teleskoprohrs, das in dem dritten Teleskoprohr angeordnet ist. Ergänzend oder alternativ kann das dritte Teleskoprohr beispielsweise drehfest zu den beiden anderen Teleskoprohren angeordnet sein.

Bei einigen weiteren Ausführungsbeispielen ist die Gewindespindel drehfest mit dem Teleskoprohr mit dem größten Querschnitt verbunden. Ergänzend oder alternativ kann die Gewindespindel auch mit der Deckplatte verbunden sein. Ferner kann das Bauteil drehfest mit dem Teleskoprohr mit der kleinsten Querschnittsfläche verbunden sein. Dadurch, dass diese Bauteile drehfest zueinander angeordnet sind, kann beispielsweise bewirkt werden, dass wenn sich die Hohlwelle dreht, das Bauteil und die Hohlwelle in die gleiche Richtung bewegbar sind. Mit anderen Worten ausgedrückt, kann so möglicherweise erreicht werden, dass die Hohlwelle und das Bauteil gleichzeitig bewegt werden können. Das Innengewinde der Hohlwelle kann sich evtl. zeitgleich entlang des Außengewindes der Gewindestange entlangschrauben, wenn sich das Innengewinde des Bauteils am Außengewinde der Hohlwelle entlangschraubt.

Bei einigen weiteren Ausführungsbeispielen ist die Mehrzahl der Teleskoprohre so ineinander geführt, dass sie durch ihre Umfangsform drehfest zueinander angeordnet sind. Dadurch kann beispielsweise auf weitere Elemente verzichtet werden, die die Teleskoprohre drehfest zueinander positionieren. Die Teleskoprohre können beispielsweise nur in axialer Richtung zueinander bewegt werden.

Bei einigen weiteren Ausführungsbeispielen weisen die Teleskoprohre einen im Wesentlichen rechteckigen Querschnitt auf. Je nach Anwendungsfall können die Teleskoprohre auch jedweden anderen ähnlichen Querschnitt aufweisen, der eine Rotationsbewegung der Teleskoprohre zueinander ausschließt. Solche Querschnitte können beispielsweise viereckige, dreieckige, mehreckige und/oder ovale Querschnitte, etc. sein.

Ergänzend oder alternativ können das Bauteil und die Gewindespindel auch über andere Bauteile als über die Teleskoprohre drehfest zueinander angeordnet werden. Dadurch kann beispielsweise ermöglicht werden, dass auf die Teleskoprohre verzichtet werden kann.

Bei einigen weiteren Ausführungsbeispielen ist die Antriebseinrichtung innerhalb einer axialen Ausdehnung der Hohlwelle angeordnet. Dadurch kann ggf. ermöglicht werden, dass die Hubsäule eine sehr geringe Bauhöhe aufweist. Dies kann ggf. möglich sein, weil die Antriebseinrichtung nicht in axialer Richtung über oder unter bzw. neben der Hohlwelle oder der Gewindespindel angeordnet ist. Dadurch kann beispielsweise ermöglicht werden, dass die Hubsäule eine Länge bzw. Höhe aufweist, die maximal der Länge der Gewindespindel oder der Länge der Hohlwelle entspricht. Die Antriebseinrichtung benötigt also in axialer Richtung keinen eigenen Bauraum, weil sie in radialer Richtung neben der Hohlwelle angeordnet ist. Die Antriebseinrichtung kann konzentrisch zu der Gewindespindel angeordnet sein. Beispielsweise kann die Antriebseinrichtung bzw. der Motor konzentrisch über die Gewindespindel geschoben sein. Ein Rotor der Antriebseinrichtung kann mit der Hohlwelle verbunden sein.

Bei einigen weiteren Ausführungsbeispielen ist die Antriebseinrichtung ein Hohlwellenmotor. So kann beispielsweise auf einfache Art und Weise ermöglicht werden, dass die Antriebseinrichtung innerhalb einer axialen Ausdehnung der Hohlwelle angeordnet ist. Beispielsweise kann der Rotor des Hohlwellenmotors an der Hohlwelle befestigt sein. Unter Umständen kann so ggf. ermöglicht werden, dass die Antriebseinrichtung die Hohlwelle relativ zu der Gewindespindel und dem Bauteil dreht.

Bei einigen weiteren Ausführungsbeispielen ist die Hohlwelle der Rotor. Dadurch kann beispielsweise ermöglicht werden, dass ein Bauraum der Hubsäule in radialer Richtung reduziert werden. So kann die Hubsäule beispielsweise mit einem vergleichsweise geringen Durchmesser ausgebildet werden.

Bei einigen weiteren Ausführungsbeispielen ist ein Stator des Hohlwellenmotors an einem Teleskoprohr befestigt. Beispielsweise kann der Stator an dem dritten Teleskoprohr befestigt sein, das zwischen zwei anderen Teleskoprohren angeordnet ist. So kann ggf. der Stator als nicht drehendes Bauteil an einem anderen nicht drehenden Bauteil festgelegt werden.

Bei einigen weiteren Ausführungsbeispielen ist der Stator ausgebildet, um bei einer axialen Bewegung der Hohlwelle in eine axiale Richtung mit der Hohlwelle bewegt zu werden. Dadurch kann ggf. ermöglicht werden, dass eine Antriebswirkung auch dann erhalten bleibt, wenn die Hohlwelle um eine axiale Länge bewegt wird, die größer ist als eine axiale Ausdehnung des Stators. Es kann also beispielsweise ein Stator mit einer vergleichsweise geringen axialen Ausdehnung bereitgestellt werden.

Alternativ kann der Stator in eine axiale Richtung unbeweglich zu der Gewindestange angeordnet sein. In diesem Fall kann der Stator beispielsweise eine Länge aufweisen, die mindestens einer Länge einer maximal möglichen axialen Bewegung der Hohlwelle entspricht. So kann möglicherweise auch bewirkt werden, dass sich der Rotor bei einem Hub nicht aus dem Bereich des Stators und dem von diesen erzeugten Magnetfeldern herausbewegen kann.

Bei einigen weiteren Ausführungsbeispielen ist die Antriebseinrichtung ein elektronisch kommutierter Hohlwellenmotor. Es kann ggf. ermöglicht werden, dass die Hubsäule eine höhere Hubgeschwindigkeit und eine größere Hubkraft erhält, verglichen mit einer Hubsäule mit gleichem Querschnitt, die einen mit Wechselstrom betriebenen Hohlwellenmotor aufweist. Ergänzend oder alternativ kann ggf. auch eine Geräuschemission reduziert sein. Im Vergleich zu einem mechanisch kommutierten Motor kann beispielsweise auch eine Bauhöhe geringe Bauhöhe ermöglicht werden.

Ergänzend oder alternativ kann bei der Hubsäule gemäß einem Ausführungsbeispiel das Außengewinde der Hohlwelle und das Gewinde der Gewindespindel die gleiche Drehrichtung aufweisen. Dadurch kann ggf. auf einfache Art und Weise ermöglicht werden, dass sich das Bauteil und die Hohlwelle in die gleiche axiale Richtung bewegen, wenn die Hohlwelle gedreht wird.

Ergänzend oder alternativ kann bei manchen Ausführungsbeispielen das Außengewinde der Hohlwelle und das Gewinde der Gewindespindel die gleiche Steigung aufweisen. So kann ggf. ermöglicht werden, dass bei einer Drehung der Hohlwelle das Bauteil und die Hohlwelle um den gleichen Weg in die axiale Richtung bewegt werden.

Optional kann, um ggf. eine übersetzte Bewegung des Bauteils und der Hohlwelle zueinander zu erreichen, die Hohlwelle und die Gewindespindel ein Gewinde mit unterschiedlichen Steigungen aufweisen. Beispielsweise können sich die Steigungen der Gewindespindel und der Hohlwelle so zueinander verhalten, dass die Hohlwelle einen größeren Weg als das Bauteil zurücklegt. Alternativ können sich die Steigungen so zueinander verhalten, dass das Bauteil einen größeren Weg als die Hohlwelle zurücklegt.

Bei einigen weiteren Ausführungsbeispielen umfasst die Hubsäule ein weiteres Bauteil mit einem Innengewinde, das mit dem Außengewinde der Hubsäule in Eingriff steht. Dieses kann ggf. mit einem weiteren Teleskoprohr, das drehfest zu der Gewindespindel angeordnet ist, verbunden werden. So kann beispielsweise ermöglicht werden, dass das Bauteil ebenfalls drehfest zu der Gewindespindel angeordnet ist. Bei einer Drehung der Hohlwelle können sich das erste Bauteil, das zweite Bauteil und die Hohlwelle ggf. in die gleiche axiale Richtung bewegen. Dadurch kann beispielsweise bewirkt werden, dass ein noch größerer Hub durchgeführt werden kann, im Vergleich zu der kleinsten möglichen Bauhöhe der Hubsäule in einem eingezogenen Zustand.

Bei einigen weiteren Ausführungsbeispielen kann die Hubsäule eine Mehrzahl von Bauteilen mit einem Innengewinde aufweisen, die mit dem Außengewinde der Hohlwelle in Eingriff stehen. So kann beispielswiese der mögliche Hub in einem Vergleich zu einer kleinsten möglichen Baugröße noch weiter vergrößert werden. Beispielsweise kann die Hubsäule vier, fünf, sechs, sieben, acht oder mehr Bauteile mit einem Innengewinde aufweisen, die mit dem Außengewinde der Hohlwelle in Eingriff stehen. Beispielsweise kann jedes dieser Bauteile mit einem Teleskoprohr verbunden sein. So kann beispielsweise eine vielfach teleskopische Hubsäule bereitgestellt werden.

Die genannten Effekte einzelner Merkmale oder Ausführungsbeispiele sind lediglich beispielshafte Effekte. Selbstverständlich können sich alternative oder ergänzende Effekte ergeben.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
Fig. 1 zeigt eine schematische Darstellung einer Seitenansicht einer Hubsäule gemäß einem Ausführungsbeispiel;
Fig. 2 zeigt eine schematische Darstellung einer Seitenansicht einer Hubladesäule gemäß einem weiteren Ausführungsbeispiel in einer eingefahrenen Position;
Fig. 3 zeigt eine schematische Darstellung einer Seitenansicht der Hubsäule gemäß Fig. 2 in einer ausgefahrenen Position;
Fig. 4 zeigt eine schematische Darstellung einer Seitenansicht einer Hubsäule gemäß einem weiteren Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

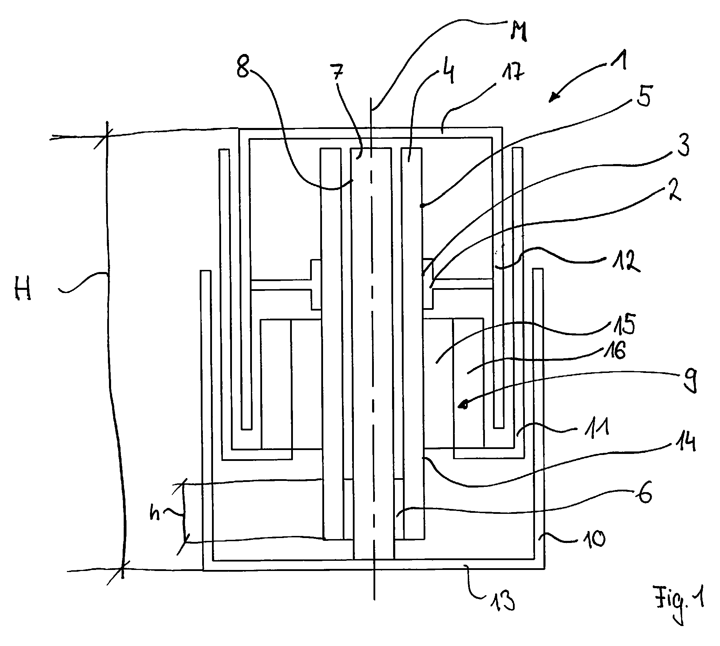

Fig. 1 zeigt eine schematische Darstellung einer Seitenansicht einer Hubsäule gemäß einem Ausführungsbeispiel.

Eine in Fig. 1 gezeigt Hubsäule 1 umfasst ein Bauteil 2 mit einem Innengewinde 3. Ferner hat die Hubsäule 1 eine Hohlwelle 4. Die Hohlwelle 4 weist ein Außengewinde 5 auf. Das Außengewinde 5 steht mit dem Innengewinde 3 des Bauteils 2 ein Eingriff. Die Hohlwelle 4 weist auch ein Innengewinde 6 auf. Die Hubsäule 1 umfasst ebenfalls eine Gewindespindel 7. Die Gewindespindel 7 weist ein Außengewinde 8 auf. Das Außengewinde 8 der Gewindespindel 7 steht mit dem Innengewinde 6 der Hohlwelle 4 in Eingriff. Ferner umfasst die Hubsäule eine Antriebseinrichtung 9. Die Antriebseinrichtung 9 ist ausgebildet, um die Hohlwelle 4 relativ zu der Gewindespindel 7 und dem Bauteil 2 zu drehen. Bei einer Drehung der Hohlwelle 4 sind das Bauteil 2 und die Hohlwelle 4 in die gleiche axiale Richtung bewegbar. Dadurch verändert sich eine Höhe H der Hubsäule 1.

Das Bauteil 2 weist in radialer Richtung eine größere Ausdehnung auf als ein Hohlwellenmotor, mit dem die Hubsäule angetrieben wird. Dadurch kann bei manchen Ausführungsbeispielen genügend Platz zur Aufnahme des Antriebs geschaffen werden. In axialer Richtung weist das Bauteil 2 eine kleinere Ausdehnung auf, als die Gewindespindel 7 und/oder als die Hohlwelle 4, beispielsweise wenigstens um einen Faktor 1.5, 2, 3 4, 5, 6, 7, 8, 9, 10 oder dergleichen. Bei der Gewindespindel 7 handelt es sich um ein Vollmaterial. Bei einigen weiteren, nicht dargestellten Ausführungsbeispielen kann die Gewindespindel auch als Hohlwelle ausgebildet sein.

Bei dem Ausführungsbeispiel der Fig. 1 sind die Hohlwelle 4 und die Gewindespindel 7 parallel zu einer Längsachse M angeordnet. Die Hohlwelle 4 dreht sich um die Längsachse M. Ferner umfasst die Hubsäule 1 gemäß dem Ausführungsbeispiel der Fig. 1 ein erstes Teleskoprohr 10. In dem ersten Teleskoprohr 10 ist ein zweites Teleskoprohr 11 angeordnet. Das zweite Teleskoprohr 11 ist in dem ersten Teleskoprohr 10 geführt. Dazu weist das erste Teleskoprohr 10 eine größere Querschnittsfläche als das zweite Teleskoprohr 11 auf. Das erste Teleskoprohr 10 weist eine Querschnittsfläche auf, die ähnlich zu einer Querschnittsfläche des zweiten Teleskoprohres 11 ist. In dem zweiten Teleskoprohr 11 ist ein drittes Teleskoprohr 12 geführt. Das dritte Teleskoprohr 12 weist eine kleinere Querschnittsfläche auf als das zweite Teleskoprohr 11. Die Querschnittsfläche des dritten Teleskoprohrs 12 ist ähnlich zu der Querschnittsfläche des zweiten Teleskoprohrs 11.

Bei weiteren, nicht dargestellten Ausführungsbeispielen können die Teleskoprohre Querschnittsflächen aufweisen, die nicht ähnlich zueinander sind bzw. keine drehfeste Führung der Teleskoprohre zueinander bewirken. In diesen Fällen können die Teleskoprohre ggf. durch andere Mittel zueinander geführt bzw. drehfest festgelegt sein.

Das erste Teleskoprohr 10 ist mit einer Standplatte 13 verbunden. Die Standplatte 13 kann beispielsweise zum Befestigen der Hubsäule 1 an einem nicht dargestellten Untergrund oder Boden dienen. Bei dem Ausführungsbeispiel der Figur 1 ist die Gewindespindel 7 drehfest an der Standplatte 13 befestigt. Dadurch ist die Gewindespindel 7 auch drehfest zu dem ersten Teleskoprohr 10 angeordnet. Folglich ist die Gewindespindel 7 auch drehfest zu den anderen Teleskoprohren 11 und 12 angeordnet.

Das Außengewinde 8 der Gewindespindel 7 ist über eine gesamte Länge in eine axiale Richtung entlang der Achse M an der Gewindespindel 7 ausgebildet. Das Innengewinde 6 der Hohlwelle 4, das mit dem Außengewinde der der Gewindespindel 7 in Eingriff steht, ist dagegen nur abschnittsweise in einem kleinen Bereich der axialen Ausdehnung der Hohlwelle 4 ausgebildet. Beispielsweise kann das Innengewinde 6 eine Höhe h aufweisen, die eine ausreichende Führung der Hohlwelle 4 entlang der Gewindespindel 7 ermöglicht. Dabei kann die Höhe h jedoch klein genug ausgebildet sein, um eine Reibung möglichst gering zu halten. Beispielsweise kann ein Verhältnis der Höhe h des Innengewindes 6 der Hohlwelle 4 zu der Höhe H der Hubsäule 1 h/H kleiner sein als 1/2, 1/5, 1/10, 1/20. Ggf. kann das Innengewinde 3 eine Gewindemutter oder ein Gewindemuttersystem sein. Das Innengewinde 6 der Hohlwelle 4 ist an einem Bereich bzw. Ende der Hohlwelle 4 angeordnet, der der Standplatte 13 zugewandt ist.

Bei einigen weiteren, nicht dargestellten Ausführungsbeispielen kann das Innengewinde der Hohlwelle unterbrochen ausgebildet sein oder zumindest abschnittsweise gleichmäßig verteilt an einem radial inneren Bereich der Hohlwelle angeordnet sein. Alternativ kann die Hohlwelle entlang ihrer gesamten Länge ein Innengewinde aufweisen.

Die Antriebseinrichtung 9 kann ein Elektromotor sein. Bei dem Ausführungsbeispiel der Fig. 1 ist die Antriebseinrichtung 9 ein Hohlwellenmotor. Die Antriebseinrichtung 9 ist so angeordnet, dass sie innerhalb der axialen Ausdehnung der Gewindespindel 7 liegt. Dadurch kann ggf. eine geringe Bauhöhe der Hubsäule 1 ermöglicht werden, weil die Antriebseinrichtung 9 nicht noch in axialer Richtung zusätzlichen Bauraum zu der Länge der Gewindespindel 7 benötigt. An einer radial nach außen zeigenden Umfangsfläche 14 der Hohlwelle 4 ist ein Rotor 15 der Antriebseinrichtung 9 befestigt.

Bei weiteren, nicht dargestellten Ausführungsbeispielen kann die Hohlwelle selbst als Rotor ausgebildet sein.

Ein Stator 16 der Antriebseinrichtung 9 ist an dem zweiten Teleskoprohr 12 befestigt. Damit ist der Stator 16 drehfest zu der Gewindespindel 7 angeordnet. Das Außengewinde 5 der Hohlwelle 4 kann beispielsweise oberhalb eines Bereichs, in dem der Rotor 15 befestigt ist, ausgebildet sein. Beispielsweise kann das Außengewinde 5 nur in dem Bereich der Hohlwelle 4 ausgebildet sein, der sich relativ zu dem Bauteil 2 bewegt. Dadurch kann ggf. eine Herstellung der Hohlwelle 4 vereinfacht werden.

Bei weiteren, nicht dargestellten Ausführungsbeispielen kann die Hohlwelle ein Außengewinde aufweisen, das entlang der gesamten Umfangsfläche ausgebildet ist.

Das Bauteil 2, das mit seinem Innengewinde 3 in das Außengewinde 5 der Hohlwelle 4 greift, ist drehfest mit dem dritten Teleskoprohr 12 verbunden. Das dritte Teleskoprohr 12 ist ausschließlich durch das Bauteil 2 an der Hohlwelle 4 geführt. Dadurch ist das Bauteil 2 drehfest zu der Gewindespindel 7 und den Teleskoprohren 10, 11 und 12 angeordnet.

Das dritte Teleskoprohr 12 ist in axialer Richtung mit einer Deckplatte 17 verschlossen. Diese kann beispielsweise zum Befestigen, Anlegen oder als Kontakt für eine zu hebenden oder zu stützenden Vorrichtung dienen.

Bei einigen weiteren, nicht dargestellten Ausführungsbeispielen weist die Hubsäule 1 keine Deckplatte 17 bzw. eine Befestigungsplatte auf. In diesen Fällen kann die Anwendungen direkt mit dem Teleskoprohr über Schrauben verbunden sein.

Durch die beschriebene Anordnung kann ggf. bewirkt werden, dass wenn die Hohlwelle 4 durch die Antriebsvorrichtung 9 angetrieben wird, sich die Hohlwelle 4 um die Achse M dreht. Bei einer entsprechenden Drehrichtung wandert die Hohlwelle 4 nach oben, weg von der Standplatte 13. Dazu schraubt sich das Innengewinde 6 entlang an dem Außengewinde 8 der Gewindespindel 7. Gleichzeitig wandert das Bauteil 2, weil es durch das dritte Teleskoprohr drehfest angeordnet ist, relativ zu der Hohlwelle 4 entlang der Achse M, weg von der Deckplatte 13. Dies erfolgt zusätzlich zu dem Hub, der ausgeführt wird, weil sich die Hohlwelle 4 in axialer Richtung weg von der Deckplatte 13 bewegt. Dadurch kann bei gleicher Bauhöhe ggf. der doppelte Hubweg erreicht werden. Um die Drehung der Hohlwelle 4 zu bewirken, kann über den Stator 16 ein magnetisches Feld erzeugt werden. Dieses versetzt den Rotor 15, der an der Hohlwelle 4 befestigt ist, in eine Drehbewegung.

Bei weiteren, nicht dargestellten Ausführungsbeispielen kann die Hohlwelle 4, wenn sie als Rotor ausgebildet ist, direkt gedreht werden. So kann beispielsweise das Ausfahren der Hubsäule 1 bewirkt werden.

Um das Einfahren der Hubsäule 1 zu bewirken, wird die Hohlwelle 4 in die andere, entgegengesetzte Richtung gedreht. Dazu wird die Antriebsvorrichtung 9 entgegengesetzt angesteuert. Von dem Stator 16 wird ein entsprechendes magnetisches Feld erzeugt. Dann wandern das Bauteil 2 und die Hohlwelle 4 gleichzeitig in Richtung der Standplatte 13.

Bei einigen Ausführungsbeispielen ist die Antriebseinrichtung als ein Hohlwellengleichstrommotor ausgebildet sein. Dadurch kann ggf. neben dem geringen Bauraum in radialer und in axialer Richtung auch eine große Hubkraft bewirkt werden. Beispielsweise kann der Hohlwellengleichstrommotor elektrisch kommutiert sein. So kann beispielsweise eine besonders geräuscharme Hubsäule bereitgestellt werden.

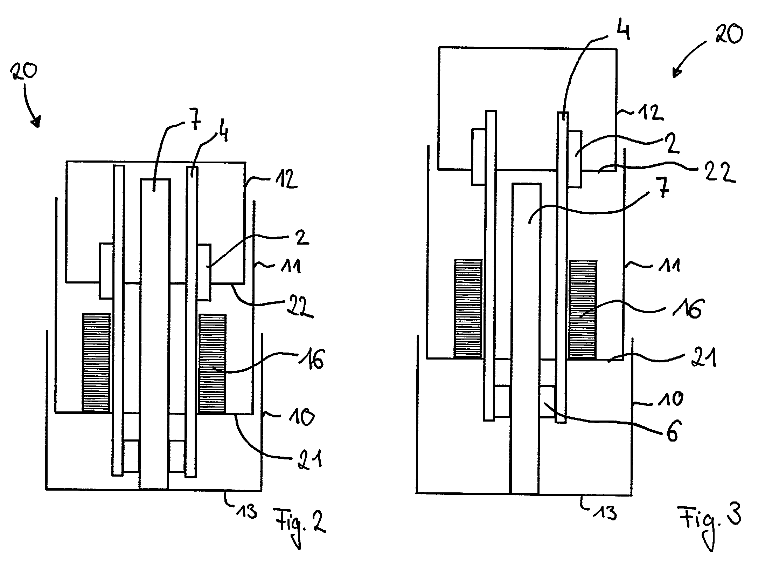

Fig. 2 zeigt eine schematische Darstellung einer Seitenansicht einer Hubsäule gemäß einem weiteren Ausführungsbeispiel in einer eingefahrenen Position.

Eine in Fig. 2 gezeigte Hubsäule 20 ist im Wesentlichen analog zu der Hubsäule 1 ausgebildet. Die Hubsäule 20 umfasst, wie auch die Hubsäule 1, eine Hohlwelle 4, eine Gewindespindel 7 und eine Antriebseinrichtung. Die Antriebseinrichtung der Hubsäule 20 unterscheidet sich von der Antriebseinrichtung 9.

Bei der Hubsäule 20 ist die Hohlwelle 4 als Rotor ausgebildet. Ein Stator 16 bzw. dessen Wicklungen sind an dem zweiten Teleskoprohr 11 angeordnet. Das zweite Teleskoprohr 11 umfasst einen Boden 21. Der Stator 16 kann ggf. in radialer Richtung an dem Boden 21 des Teleskoprohrs 11 festgelegt sein. Der Stator 16 wird in axialer Richtung durch den Boden 21 gehalten. Dadurch kann der Stator 16 mit dem Teleskoprohr 11 bewegt werden, wenn das zweite Teleskoprohr 11 in eine axiale Richtung bewegt wird.

Auch die dritte Teleskopsäule 12 umfasst einen Boden 22. Das Bauteil 2 ist in dem Boden 22 der dritten Teleskopsäule 12 befestigt bzw. eingelassen. Dadurch kann eine einfach Verbindung zwischen dem zweiten Bauteil 2 und der dritten Teleskopsäule 12 bewirkt werden. Auch kann so das Bauteil 2 gegenüber der Gewindespindel 7 drehfest angeordnet werden. In Fig. 2 ist die Hubsäule 20 in einer eingefahrenen Position dargestellt.

Fig. 3 zeigt eine schematische Darstellung einer Seitenansicht der Hubsäule 20 gemäß Fig. 2 in einer ausgefahrenen Position.

Um die Hubsäule 20 auszufahren, wird die Hohlwelle 4, wie für die Hubsäule 1 beschrieben, gedreht. Dabei befindet sich das Bauteil 2 an einem oberen Ende der Hohlwelle 4, das der Standplatte 13 abgewandt ist. Auch das Innengewinde 6 der Hohlwelle 4 ist von der Deckplatte 13 weiter beabstandet als in einem eingefahrenen Zustand.

Mit anderen Worten ausgedrückt, kann mit der Hubsäule nach den Ausführungsbeispielen bewirkt werden, dass ein Hub größer ist als eine eingezogene Höhe der Hubsäule. Mit der Hubsäule kann also ein Hub ausgeführt werden, der eine größere Höhe aufweist, als die Hubsäule in einem eingefahrenen Zustand. So kann ggf. ermöglicht werden, dass die Hubsäule nach zumindest einem der Ausführungsbeispiele in einer Vielzahl von Anwendungen, wie Operationstischen, Präsentationstischen, Behandlungsstühlen und dgl., eingesetzt werden können. Dadurch, dass die Hubsäule eine so geringe Bauhöhe aufweisen kann, können die genannten Vorrichtungen beispielsweise in eine erste sehr tiefe Position gestellt werden. Dies kann beispielsweise ein Umsetzen von Patienten aus einem Behandlungsstuhl oder einer Trage erleichtern. Ferner können die genannten Vorrichtungen durch den großen Hub um eine große Höhe in eine zweite Position verstellt werden. In dieser hohen Position kann ggf. eine Operation oder Behandlung oder Präsentation durchgeführt werden. Die Hubsäule eignet sich beispielsweise für alle Anwendungen, die eine niedrige eingezogene Höhe und einen großen Hub benötigen. Durch die Ausbildung gemäß dem Ausführungsbeispiel können ggf. Hubsäulen, die Motoren und Vollwellen oder zwei Schrauben, die parallel zueinander angeordnet sind, oder andere mechanisch aufwendige Konstruktionen, die auf Ketten oder Seilen beruhen, ersetzt werden.

Der begrenzte Raum in axialer Richtung kann beispielsweise durch ein System mit zwei Bauteilen oder einer Mehrzahl von Bauteilen mit einem Innengewinde, die zur gleichen Zeit bewegt werden können, genutzt werden. Der Antriebsstrang, also die Kombination aus dem Übersetzungsgetriebe und dem Antrieb, kann ggf. in solch einer Weise konstruiert sein, dass der Rotor des Elektromotors mit der Hohlwelle verbunden ist. Die Hohlwelle (z.B. Rohr) kann ein erstes Innengewinde bzw. ein erstes Gewindemuttersystem auf weisen. Die Hohlwelle kann an der radial nach außen zeigenden Außenseite des Rohres ein Gewinde aufweisen. Ein zweites Gewindemuttersystem kann sich entlang dieses Gewindes an der Außenseite der Hohlwelle bewegen. Dadurch kann ggf. eine sehr kompakte und teleskopische Konstruktion ermöglicht werden, in der beide Gewindemuttersysteme zur selben Zeit bewegt werden können. Dieses synchrone Verfahren der zwei Gewindemuttersysteme kann ggf. eine Verbesserung bezüglich der Geräuschentwicklung und einer optischen Erscheinung der Hubsäule ermöglichen. Dies kann beispielsweise dann der Fall sein, wenn in einer Anwendung eine Mehrzahl von Hubsäulen eingesetzt wird. Mit der Hubsäule gemäß dem Ausführungsbeispiel kann beispielsweise ein vereinfachter Aufbau im Vergleich zu konventionelle Hubsäulen, die Getriebe, Gurte oder andere Elemente umfassen, die mit einem Motor angetrieben werden, ermöglicht werden. Dies kann ggf. wünschenswert sein, da diese konventionellen Komponenten meist Lärm oder Geräusche produzieren, was in vielen Anwendungen störend sein kann. Die Hubsäule gemäß dem Ausführungsbeispiel kann beispielsweise ein teleskopisches Ausfahren der Hubsäule und eine geringe Geräuschentwicklung bei einer geringen Anzahl von Einzelkomponenten und einen einfachen Aufbau erlauben.

Mit anderen Worten ausgedrückt, betreffen Ausführungsbeispiele eine zwei oder mehr Schrauben oder Muttern bzw. Bauteile mit einem Innengewinde umfassende Konstruktion für eine teleskopische Hubsäule. Diese kann ggf. auch einen Hohlwellenmotor umfassen. So kann beispielsweise eine Hubsäule mit einem größeren Hub als einer kleinsten eingezogenen Höhe bereit gestellt werden.

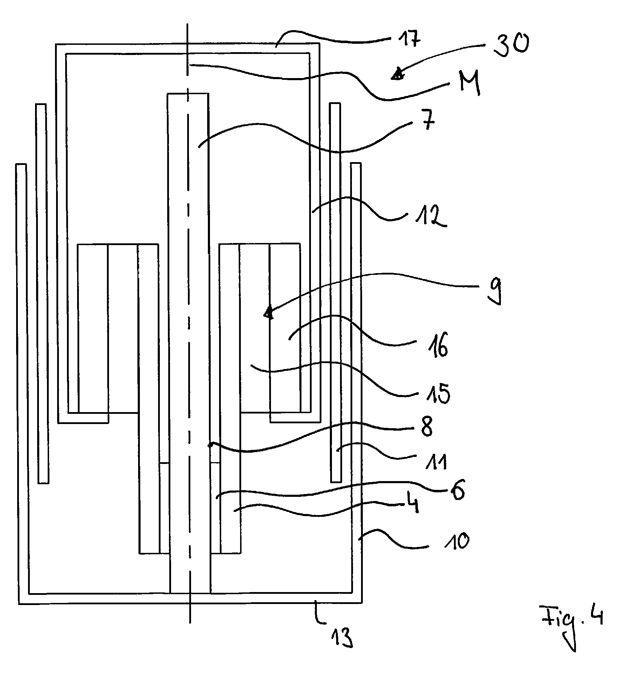

Fig. 4 zeigt eine schematische Darstellung einer Seitenansicht einer Hubsäule gemäß einem weiteren Ausführungsbeispiel.

Eine in Fig. 4 gezeigte Hubsäule 30 umfasst analog zu den Hubsäulen der anderen Ausführungsbeispiele eine Mehrzahl von Teleskoprohren 10, 11 und 12, die zueinander verstellbar sind. Um die Verstellung zu bewirken, umfasst die Hubsäule 30 eine Antriebseinrichtung 9. Bei der Antriebseinrichtung 9 handelt es sich um einen Hohlwellenmotor. Ein Rotor 15 des Hohlwellenmotors ist an einer Hohlwelle 4 befestigt.

Bei einigen weiteren Ausführungsbeispielen kann die Hohlwelle selbst als Rotor ausgebildet sein.

Ein Stator 16 des Hohlwellenmotors ist an dem Teleskoprohr 12 befestigt. Das Teleskoprohr 12 kann aus dem anderen Teleskoprohr 10 ein- oder ausgefahren werden. Der Rotor 16 ist an einer Hohlwelle 4, die um eine Gewindespindel 7 drehbar gelagert ist, befestigt. Die Gewindespindel 7 ist drehfest zu den Teleskoprohren 10, 11 und 12 angeordnet. Dazu ist die Gewindespindel 7 an einer Standplatte 13 befestigt. Mit dem Teleskoprohr 10 ist eine Deckplatte 17 verbunden.

Die Gewindespindel 7 weist ein Außengewinde 8 auf. In das Außengewinde 8 greift ein Innengewinde 6 der Hohlwelle 4 ein. Wenn die Hohlwelle 4 durch die Antriebsvorrichtung 9 angetrieben wird, dreht sie sich, sodass sich das Innengewinde 6 der Hohlwelle 4 entlang des Außengewindes 8 der Gewindespindel 7 in axiale Richtung bewegt. Zum Ausfahren der Hubsäule 30 schraubt sich dabei die Hohlwelle 4 weg von der Deckplatte 13 bzw. entgegen einer wirkenden Gewichtskraft. Zum Einfahren der Hubsäule 30 bewegt sich die Hohlwelle 4 in die andere Richtung. Dabei kann ggf. ein Hub erreicht werden, der einer Länge der Gewindespindel 7 und damit einer maximalen Bauhöhe der Hubsäule 30 entspricht. Mit der Hubsäule 30 kann beispielsweise eine teleskopische Hubsäule 30 bereitgestellt werden, die eine höhere mechanische Leistung aufweist als eine Hubsäule, die einen Wechselstromhohlwellenmotor und einen gleichen Querschnitt aufweist. Ferner kann eine Geschwindigkeit beim Bewegen der Hubsäule 30 mit einem elektrisch kommutierten Hohlwellenmotor leichter kontrolliert werden als bei einem Hohlwellenmotor der mit Wechselstrom angetrieben wird. Ferner kann eine Ein- und/oder Ausfahrgeschwindigkeit der Hubsäule 30 ebenfalls erhöht sein. Die Hubsäule 30 umfasst also das Innengewinde 6 als ein Gewindemuttersystem, das in einer Hohlwelle 4 angeordnet ist, die entlang einer Gewindespindel mit einem Außengewinde bewegt werden kann. Die Hohlwelle 4 wird mittels eines elektrisch kommutierten Gleichstromhohlwellenmotors angetrieben.

Mit anderen Worten ausgedrückt, kann mit der Hubsäule 30 mit einem elektrisch kommutierten Gleichstrommotor eine größere Hubleistung, eine höhere Hubgeschwindigkeit, einer geringere Bauhöhe und/oder eine geringere Geräuschentwicklung des Antriebssystems ermöglicht werden. Dies kann beispielsweise möglich sein, weil auf das Verwenden von Getrieberädern verzichtet werden kann. Dadurch, dass ein elektrisch kommutierter Hohlwellenmotor eingesetzt wird, kann beispielsweise signifikant mehr Leistung als mit einem konventionellen Wechselstrommotor bereitgestellt werden. Ferner kann ggf. eine geringere Bauhöhe in Kombination mit einer geringeren Geräuschentwicklung bewirkt werden.

Eine Hubsäule nach einem der Ausführungsbeispiele kann ggf. in allem möglichen Antriebs- und Hubanwendungen eingesetzt werden. Beispielsweise kann die Hubsäule zum Verstellen von Operationstischen, Krankenliegen, Präsentationstische und/oder Behandlungsstühle etc. eingesetzt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Hubsäule
- 2: Bauteil
- 3: Innengewinde
- 4: Hohlwelle
- 5: Außengewinde
- 6: Innengewinde
- 7: Gewindespindel
- 8: Außengewinde
- 9: Antriebseinrichtung
- 10: erstes Teleskoprohr
- 11: zweites Teleskoprohr
- 12: drittes Teleskoprohr
- 13: Standplatte
- 14: Umfangsfläche
- 15: Rotor
- 16: Stator
- 17: Deckplatte
- 20: Hubsäule
- 21: Boden
- 22: Boden
- 30: Hubsäule

- M: Achse
- H: Höhe
- h: Höhe Innengewinde

## Patentansprüche

1. Hubsäule (1, 20) mit den folgenden Merkmalen:
einem Bauteil (2) mit einem Innengewinde (3); und
einer Hohlwelle (4) mit einem mit dem Innengewinde (3) des Bauteils (2) in Eingriff stehenden Außengewinde (5) und einem Innengewinde (6); und
einer innerhalb der Hohlwelle (4) angeordneten Gewindespindel (7) mit einem mit dem Innengewinde (6) der Hohlwelle (4) in Eingriff stehenden Außengewinde (8); und
einem Hohlwellenmotor (9), dessen Rotor (15) an der Hohlwelle (4) befestigt ist und der ausgebildet ist, um die Hohlwelle (4) relativ zu der Gewindespindel (7) und dem Bauteil (2) zu drehen;
wobei das Bauteil (2) und die Hohlwelle (4) bei einer Drehung der Hohlwelle (4) in die gleiche axiale Richtung bewegbar sind, sodass eine Höhe der Hubsäule (1, 20) veränderbar ist.

2. Hubsäule (1, 20) nach einem der vorhergehenden Ansprüche, umfassend eine Mehrzahl von Teleskoprohren (10, 11, 12).

3. Hubsäule (1, 20) nach einem der vorhergehenden Ansprüche, wobei der Hohlwellenmotor (9) innerhalb einer axialen Ausdehnung der Hohlwelle (4) angeordnet ist.

4. Hubsäule (1, 20) nach einem der vorhergehenden Ansprüche, wobei die Hohlwelle (4) der Rotor (15) ist.

5. Hubsäule (1, 20) nach einem der Ansprüche 3 bis 4, wobei ein Stator (16) des Hohlwellenmotors an einem Teleskoprohr (11) befestigt ist, das zwischen zwei anderen Teleskoprohren (10, 12) angeordnet ist.

6. Hubsäule (1, 20) nach einem der vorhergehenden Ansprüche, wobei der Stator (16) ausgebildet ist, um bei einer axialen Bewegung der Hohlwelle (4) in eine axiale Richtung mit der Hohlwelle (4) bewegt zu werden.

7. Hubsäule (1, 20) nach einem der vorhergehenden Ansprüche, wobei der Hohlwellenmotor (9) ein elektronisch kommutierter Hohlwellenmotor ist.

8. Hubsäule (1, 20) nach einem der vorhergehenden Ansprüche, wobei das Außengewinde (5) der Hohlwelle (4) und das Gewinde (8) der Gewindespindel (7) die gleiche Drehrichtung aufweisen.

9. Hubsäule (1, 20) nach einem der vorhergehenden Ansprüche, wobei das Außengewinde (5) der Hohlwelle (4) und das Gewinde (8) der Gewindespindel (9) die gleiche Steigung aufweisen.

## Claims

1. Lifting column (1, 20) having the following features:
a component (2) having an internal thread (3); and
a hollow shaft (4) having an external thread (5), which is in engagement with the internal thread (3) of the component (2), and an internal thread (6); and
a threaded spindle (7) which is arranged within the hollow shaft (4) and has an external thread (8) which is in engagement with the internal thread (6) of the hollow shaft (4); and
a hollow-shaft motor (9) whose rotor (15) is fastened to the hollow shaft (4) and which is designed to rotate the hollow shaft (4) relative to the threaded spindle (7) and the component (2);
wherein the component (2) and the hollow shaft (4) can be moved in the same axial direction during a rotation of the hollow shaft (4), with the result that a height of the lifting column (1, 20) can be changed.

2. Lifting column (1, 20) according to one of the preceding claims, comprising a plurality of telescopic tubes (10, 11, 12).

3. Lifting column (1, 20) according to one of the preceding claims, wherein the hollow-shaft motor (9) is arranged within an axial extension of the hollow shaft (4).

4. Lifting column (1, 20) according to one of the preceding claim, wherein the hollow shaft (4) is the rotor (15).

5. Lifting column (1, 20) according to either of Claims 3 and 4, wherein a stator (16) of the hollow-shaft motor is fastened to a telescopic tube (11) which is arranged between two other telescopic tubes (10, 12).

6. Lifting column (1, 20) according to one of the preceding claims, wherein the stator (16) is designed to be moved in an axial direction together with the hollow shaft (4) during an axial movement of the hollow shaft (4).

7. Lifting column (1, 20) according to one of the preceding claims, wherein the hollow-shaft motor (9) is an electronically commutated hollow-shaft motor.

8. Lifting column (1, 20) according to one of the preceding claims, wherein the external thread (5) of the hollow shaft (4) and the thread (8) of the threaded spindle (7) have the same direction of rotation.

9. Lifting column (1, 20) according to one of the preceding claims, wherein the external thread (5) of the hollow shaft (4) and the thread (8) of the threaded spindle (9) have the same pitch.

## Revendications

1. Colonne de levage (1, 20) comprenant les caractéristiques suivantes :
un composant (2) avec un filetage intérieur (3) ; et
un arbre creux (4) avec un filetage extérieur (5) en prise avec le filetage intérieur (3) du composant (2) et un filetage intérieur (6) ; et
une broche filetée (7) disposée à l'intérieur de l'arbre creux (4) avec un filetage extérieur (8) en prise avec le filetage intérieur (6) de l'arbre creux (4) ; et
un moteur d'arbre creux (9), dont le rotor (15) est fixé à l'arbre creux (4) et qui est réalisé de manière à faire tourner l'arbre creux (4) par rapport à la broche filetée (7) et au composant (2) ;
le composant (2) et l'arbre creux (4), lors d'une rotation de l'arbre creux (4), pouvant être déplacés dans la même direction axiale de sorte qu'une hauteur de la colonne de levage (1, 20) puisse être modifiée.

2. Colonne de levage (1, 20) selon l'une quelconque des revendications précédentes, comprenant une pluralité de tubes télescopiques (10, 11, 12).

3. Colonne de levage (1, 20) selon l'une quelconque des revendications précédentes, dans laquelle le moteur d'arbre creux (9) est disposé à l'intérieur d'une étendue axiale de l'arbre creux (4).

4. Colonne de levage (1, 20) selon l'une quelconque des revendications précédentes, dans laquelle l'arbre creux (4) est le rotor (15).

5. Colonne de levage (1, 20) selon l'une quelconque des revendications 3 à 4, dans laquelle un stator (16) du moteur d'arbre creux est fixé au tube télescopique (11) qui est disposé entre deux autres tubes télescopiques (10, 12).

6. Colonne de levage (1, 20) selon l'une quelconque des revendications précédentes, dans laquelle le stator (16) est réalisé de manière à ce que lors d'un déplacement axial de l'arbre creux (4) dans une direction axiale, il soit déplacé conjointement avec l'arbre creux (4).

7. Colonne de levage (1, 20) selon l'une quelconque des revendications précédentes, dans laquelle le moteur d'arbre creux (9) est un moteur d'arbre creux à commutation électronique.

8. Colonne de levage (1, 20) selon l'une quelconque des revendications précédentes, dans laquelle le filetage extérieur (5) de l'arbre creux (4) et le filetage (8) de la broche filetée (7) présentent le même sens de rotation.

9. Colonne de levage (1, 20) selon l'une quelconque des revendications précédentes, dans laquelle le filetage extérieur (5) de l'arbre creux (4) et le filetage (8) de la broche filetée (9) présentent le même pas.
